**Europäisches Patentamt**

**European Patent Office**

**Office européen des brevets**

(11) Publication number:

**0 120 228**
**B1**

## (12) EUROPEAN PATENT SPECIFICATION

(45) Date of publication of patent specification: **04.10.89**

(21) Application number: **84101076.2**

(22) Date of filing: **02.02.84**

(51) Int. Cl.⁴: **H 02 B 5/04**

(54) **Power receiving equipment.**

(30) Priority: **23.03.83 JP 43222/83 u**

(43) Date of publication of application:
**03.10.84 Bulletin 84/40**

(45) Publication of the grant of the patent:
**04.10.89 Bulletin 89/40**

(84) Designated Contracting States:
**CH DE FR IT LI SE**

(56) References cited:
**DE-A-1 765 462**

(73) Proprietor: **MITSUBISHI DENKI KABUSHIKI KAISHA**
**2-3, Marunouchi 2-chome Chiyoda-ku Tokyo 100 (JP)**

(72) Inventor: **Shichi, Masaru**
**94-8, Aza Kasamatsu Noma Itami Hyogo Pref. (JP)**
Inventor: **Kudo, Atsushi**
**2-11-18, Wakakusa-cho Suma-ku Kobe Hyogo Pref. (JP)**

(74) Representative: **Fleuchaus, Leo, Dipl.-Ing. et al Fleuchaus & Wehser Melchiorstrasse 42 D-8000 München 71 (DE)**

Courier Press, Leamington Spa, England.

## Description

This invention relates to improvements in a power receiving equipment disposed on a substation or the like. (For example DE—A—1 765 462 discloses a transportable power transformer station).

A conventional three-phase power receiving equipment of the type referred to has comprised a three-phase power transformer firmly secured to a base subsequently rigidly connected to a reinforced concrete foundation buried in the earth, three low voltage bushings horizontally drawn out from one side of the power transformer one for each phase of the system, a three-phase switchgear disposed in spaced relationship on the other side of the power transformer to be connected at one end to the power transformer and at the other end to a leading-in bushing erected on the other end portion of the switchgear with a part supported by the foundation through a supporting block. Then a steel tower has been vertically disposed on another reinforced concrete foundation also buried in the earth to be spaced from the first-mentioned foundation. The steel tower has included a suspension insulator hung from a top portion thereof to connect a transmission line or bus to a leading-in line subsequently connected to the leading-in bushing.

In operation, a three-phase high voltage power from the transmission line or bus has been supplied to the three-phase switchgear through the leading-in bushing and then introduced into the three-phase power transformer where the high voltage power is stepped down to a three-phase low voltage power. The three-phase low voltage power has been transmitted to loads through the low voltage bushings. The steel tower effectively bear a tension of the transmission line or bus through the suspension insulator to prevent the tension from being directly applied to the leading-in bushing.

In conventional power receiving equipments such as described above, the reinforced concrete foundation for the steel tower has been required to be buried in the earth independently of that for the power transformer. This has resulted in the disadvantages that the construction of the two reinforced concrete foundations increase amounts of earth and sand to increase costs of a foundation work and also days thereof.

Accordingly it is an object of the present invention to provide a new and improved power receiving equipment simple in foundation work, and still decreased in days of the foundation work resulting in an inexpensive construction.

The present invention provides a power receiving equipment comprising a steel tower for supporting one end of a leading-in line drawn out from a selected one of a transmission line on a bus, and a power transformer connected to the other end of the leading-in line through a switchgear, a foundation for the steel tower made integrally with a foundation for a base fixed to the bottom of the power transformer.

In a preferred embodiment of the present invention the steel tower is vertically disposed on the foundation for the base between the switchgear and the power transformer.

In another preferred embodiment of the present invention the steel tower is vertically disposed on the base through a mounting plate bolted to the base between the switchgear and the power transformer.

The present invention will become more readily apparent from the following detailed description taken in conjunction with the accompanying drawing in which:

Figure 1 is a schematic side elevational view of one embodiment according to the power receiving equipment of the present invention;

Figure 2 is a schematic plan view of the arrangement shown in Figure 1;

Figure 3 is a view similar to Figure 1 but illustrating a modification of the present invention; and

Figure 4 is a schematic side elevational view of the footing portion of the steel tower and the adjacent components shown in Figure 3.

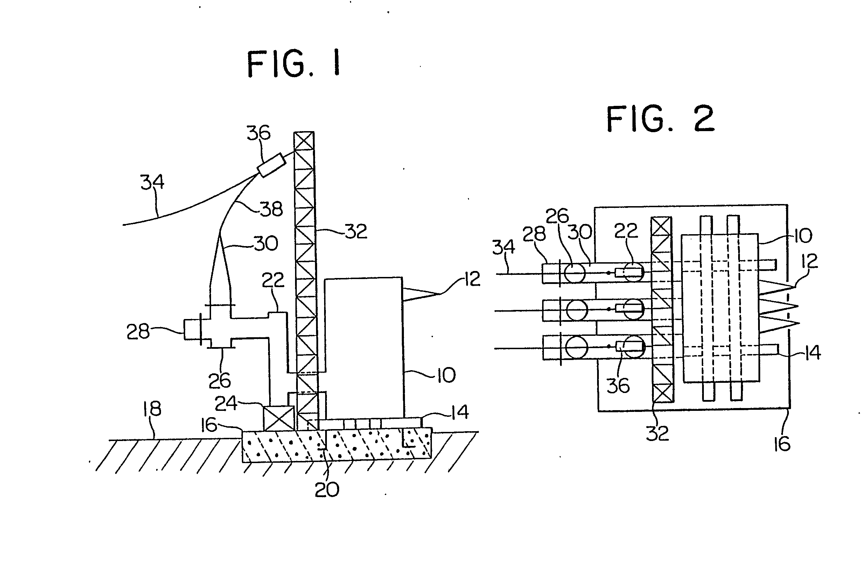

Referring now to Figures 1 and 2 of the drawing, there is illustrated one embodiment according to the power receiving equipment of the present invention. The arrangement illustrated comprises a three-phase power transformer 10 including three low voltage bushings 12 horizontally drawn out from one side, in this case, the righthand side as viewed in Figures 1 and 2 of the power transformer 10 one for each phase of the system and fixed at the bottom to a base 14 which is, in turn, connected to a reinforced concrete foundation 16 buried in the earth 18 through a plurality of anchor bolts 20 (only two of which are illustrated only for purposes of illustration) buried in the foundation 16. The base 14 is shown in Figure 2 as including four bars arranged in the form of parallel crosses.

A circuit breaker 22 is vertically disposed on a supporting block 24 disposed on the foundation 16 to be spaced from the other side of the transformer 10 by a predetermined spacing. Thus the circuit breaker 22 is spaced from the other side of the transformer 10 to form a predetermined spacing therebetween and it is directly connected at one end to the power transformer 10 and at the other end to a circuit disconnector 26 located at substantially the same level as the top of the circuit breaker 22. Then the circuit disconnector 26 is connected to a ground switch 28 located on that side thereof remote from the circuit breaker 22 and also to a leading-in bushing 30 erected at the top thereof.

As shown in Figure 2, the circuit breaker 22, the circuit disconnector 26, and the ground switch 28 are of the three-phase type and form a three-phase switchgear which is disposed in spaced relationship on the other side of the power transformer 10. Also the leading-in bushing is vertically disposed on each of three-phases of the circuit disconnector 26.

It has been a common practice to vertically dispose a steel tower on another reinforced concrete foundation buried in the earth to be spaced from that for the power transformer so that the steel tower is spaced from the leading-in bushings as required. This measure has required a pair of separate reinforced concrete foundations resulting in the disadvantages as described above.

According to the present invention, however, the foundation for the steel tower is made integral with that for the power transformer. In other words, the steel tower is vertically disposed on the same foundation as the power transformer.

In the arrangement shown in Figures 1 and 2, the steel tower 32 is vertically disposed on the foundation 16 between the circuit breaker 22 and the adjacent side of the power transformer 10. That is the steel tower 32 is located adjacent to the power transformer 10.

Then a transmission line or a bus 34 is connected to a suspension bushing 36 for each of the three-phase of the system hung from a top portion of the steel tower 32 and also to a leading line 38 connected to the suspension bushing 36 and the associated leading-in bushing 30. As described above, the suspension bushing 36 serves to bear a tension of the transmission line or bus 34 so as to prevent the tension from being directly applied to the associated leading-in bushing 30.

In general, the power transformer 10 has the heaviest weight among the components of the power receiving equipment. The higher the capacity of the power transformer and also the higher the voltage thereacross the heavier the weight thereof will be. Actually the weight of the power transformer may amount to from tens to hundredths of tons. Thus reinforced concrete foundation 16 for rigidly supporting the power transformer 10 with such a heavy weight even against earthquakes has a strength sufficient to fix the steel tower 32 thereto.

While the foundation for the steel tower and that for the power transformer have been previously required the present invention can satisfactorily accomplish the desired purposes only by using the single foundation without increasing an area required for the power receiving equipment.

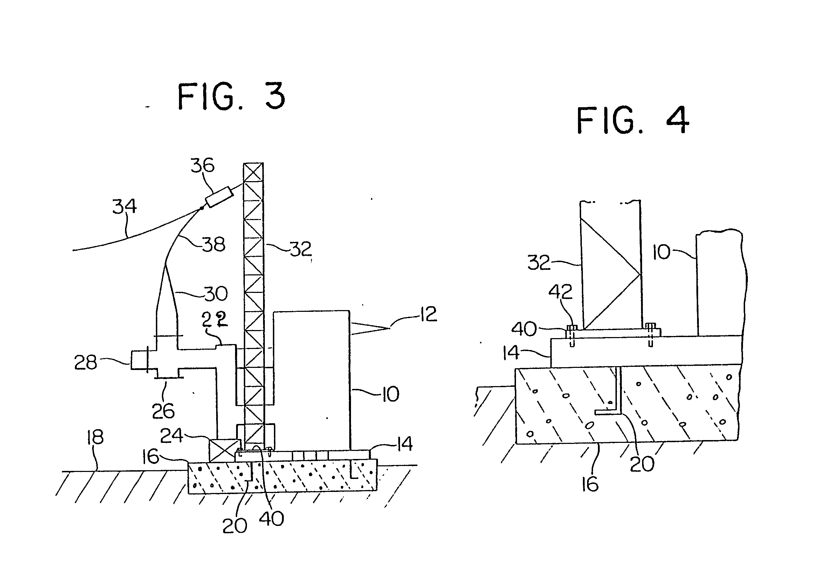

In Figures 3 and 4 wherein like reference numerals designate the components identical to those shown in Figures 1 and 2 there is illustrated a modification of the present invention. The arrangement illustrated is different from that shown in Figures 1 and 2 only in that in Figures 3 and 4 the steel tower 32 is fixed to the reinforced concrete foundation 16 between the circuit breaker 22 and the power transformer 10 by fixing the footing portion of the steel tower 32 to a mounting plate 40 and placing the mounting plate 40 on the edge portion near to the circuit breaker 22 of the base 14 followed by the fixing of the mounting plate 10 to the base 14 through a plurality of bolts 42.

In summary, the present invention provides a power receiving equipment comprising a foundation for a steel tower made integral with that for a power transformer. Thus there is provided an inexpensive power receiving equipment simple in foundation work and decreased in days of the foundation work.

## Claims

1. A power receiving equipment characterized by a steel tower (32) for supporting one end of a leading-in line (38) drawn out from a selected on of a transmission line on a bus (34), a power transformer (10) connected to the other end of said lead-in line 38 through a switchgear (22, 26, 28), a foundation (16) for said steel tower (32) made integral with a foundation (16) for a base (14) fixed to the bottom of said power transformer (10).

2. A power receiving equipment as claimed in claim 1, characterized in that said steel tower (32) is vertically disposed on said foundation (16) for said base (14) between said switchgear (22, 26, 28) and said power transformer (10).

3. A power receiving equipment as claimed in claim 1, characterized in that said steel tower (32) is fixed to said base (14) through a mounting plate (40) bolted (42) to said base (14) between said switchgear (22, 26, 28) and said power transformer (10).

## Patentansprüche

1. Eine Anlage zur Aufnahme elektrischer Energie, gekennzeichnet durch einen Stahlturm (32) zum Tragen eines Endes einer Einführungsleitung (38), die von einem ausgewählten Ende einer Energieleitung bzw. einer Stromschiene (34) abgeführt wird, einen Leistungstransformator (10), der über eine Schaltvorrichtung (22, 26, 28) an das andere Ende dieser Einführungsleitung (38) angeschlossen ist, ein Fundament (16) für den genannten Strahlturm (32), das aus einem Stück mit dem Fundament (16) für eine Unterlage (14) besteht, die am Boden des genannten Leistungstransformators (10) befestigt ist.

2. Eine Anlage zur Aufnahme elektrischer Energie gemäß Anspruch 1, dadurch gekennzeichnet, daß der genannte Stahlturm (32) senkrecht auf dem genannten Fundament (16) für die genannte Unterlage (14) zwischen der genannten Schaltvorrichtung (22, 26, 28) und dem genannten Leistungstransformator (10) angeordnet ist.

3. Eine Anlage zur Aufnahme elektrischer Energie gemäß Anspruch 1, dadurch gekennzeichnet, daß der genannte Stahlturm (32) mit Hilfe einer Montageplatte (40), die zwischen der genannten Schaltvorrichtung (22, 26, 28) und dem genannten Leistungstransformator (10) auf die genannte Unterlage (14) aufgeschraubt ist, befestigt wird.

## Revendications

1. Appareillage d'arrivée de puissance, caractérisé par une tour d'acier (32) pour supporter une extrémité d'une ligne d'entrée (38) tirée d'une ligne de transmission ou d'un bus (34), un transformateur de puissance (10) connecté à l'autre extrémité de ladite ligne d'entrée par un dispositif de communication (22, 26, 28), une fondation (16) de ladite tour d'acier (32) qui fait corps avec une foundation (16) d'une base (14) fixée au bas dudit transformateur (10).

2. Appareillage d'arrivée de puissance selon la revendication 1, caractérisé en ce que ladite tour d'acier (32) est verticalement disposée sur ladite fondation (16) de ladite base (14) entre ledit dispositif de communication (22, 26, 28) et ledit transformateur de puissance (10).

3. Appareillage d'arrivée de puissance selon la revendication 1, caractérisé en ce que ladite tour d'acier (32) est fixée à ladite base (14) par une plaque de montage (40) boulonnée (42) à ladite base (14) entre ledit dispositif de commutation (22, 26, 28) et ledit transformateur de puissance (10).

FIG. 1

FIG. 2

EP 0 120 228 B1

FIG. 4

FIG. 3